# EUROPEAN PATENT SPECIFICATION

(11) **EP 3 870 887 B1**
(45) Date of publication and mention of the grant of the patent: **02.08.2023**
(21) Application number: 19782786.8
(22) Date of filing: 10.09.2019
(51) Int. Cl.: F16L 37/52, F16L 37/00, F16L 37/62, F16L 1/26, E02F 7/10

(54) **BALL JOINT COUPLING**
KUGELGELENKKUPPLUNG
ACCOUPLEMENT DE JOINT À ROTULE

(30) Priority: 24.10.2018 NL 2021865
(43) Date of publication of application: 01.09.2021
(73) Proprietor: Motas Coupling B.V., 1976 BV IJmuiden (NL)
(72) Inventor: MENHEERE, Marco Daniël, 1402 CT Bussum (NL)
(74) Representative: Vernout, Robert
(86) International application number: PCT/NL2019/050584
(87) International publication number: WO 2020/085896

(56) References cited:
- EP-A1- 0 078 549
- EP-A1- 2 610 537
- WO-A1-2018/106111
- US-A- 3 997 197

## Description

The invention relates to a ball joint coupling for pivotally coupling two pipe parts, which ball joint coupling comprises:
- a first coupling part with a central passage and an at least partially ball-shaped outer surface;
- a second coupling part with an axially extending, central passage and an at least partially socket-shaped inner surface which corresponds with the at least partially ball-shaped outer surface in order to form a ball joint;
   wherein the second coupling part comprises a base part arranged around the central passage, and locking segments arranged around the central passage and pivotally on the base part, which locking segments each have a socket-shaped surface part,
   wherein the socket-shaped surface parts form at least a part of the at least partially socket-shaped inner surface of the second coupling part,
   wherein the locking segments are each pivotable around a tangential pivot axis between a first position, wherein the socket-shaped surface parts of the locking segments lie against the ball-shaped outer surface of the first coupling part, and a second position wherein the locking segments release the first coupling part for uncoupling of the second coupling part; and
- a blocking ring which extends around the second coupling part and is axially displaceable between a blocking position, in which the blocking ring encloses the locking segments in the first position and blocks the pivoting movement of the locking segments, and a release position for releasing the locking segments.

Such a ball joint coupling is known from US 3997197 and is used in a dredging line, which is placed floating on the water between a dredging vessel and for instance the shore. Such a dredging line is formed from pipe sections which are mutually connected with fixed couplings and such ball joint couplings.

Because dredging lines are usually in the water for a long time, fouling will accumulate on the couplings, and they will become contaminated, after a period of time. In the known ball joint coupling according to US 3997197 it is difficult in such a situation to open the coupling again when a pipe section has to be released. Because the locking segments tilt round a protrusion in the centre, a space between the locking segment and the base part will become smaller when the locking segments pivot to the second position. When fouling and dirt are present in the space, this obstructs the pivoting movement of the locking segment, whereby opening of the known ball joint coupling is impeded.

It is therefore an object of the invention to reduce or even obviate the above stated drawbacks.

This object is achieved according to the invention with a ball joint coupling according to the preamble, which is characterized in that a hinge is arranged between a first axial end of each locking segment and the base part, wherein the tangential pivot axis is formed by the hinge.

Because the hinge is arranged on the first axial end of a locking segment, no space will be reduced when the locking segment is opened. All fouling and dirt will be brought along when the locking segment is opened and will not be pressed into a cavity, which may impede the pivoting movement of the locking segment.

The terms axial and tangential used above are related to the central passage in the second coupling part. The first axial end of the locking segment is thereby the end of the locking segment in the direction parallel to the axial direction of the central passage.

The tangential pivot axis is here parallel to the tangential direction of the central passage, i.e. both perpendicular of the axial direction of the central passage and perpendicular of the radial direction of the central passage.

In a preferred embodiment of the ball joint coupling according to the invention the socket-shaped surface part of a locking segment lies adjacently of a second axial end of the locking segment, which lies opposite the first axial end on which the hinge is arranged.

Providing the socket-shaped surface part as far from the hinge as possible makes it possible to obtain a maximum opening stroke between the first position and the second position, which simplifies coupling of the first coupling part to the second coupling part.

In a further embodiment of the ball joint coupling according to the invention, the hinge of each locking segment is arranged on the outer periphery of the base part. Arranging the hinge on the outer side of the base part reduces the chance of slurry running out of the dredging line and over the hinges during uncoupling and coupling of the ball joint coupling according to the invention.

In a further preferred embodiment of the ball joint coupling according to the invention the hinge of each locking segment is a pin hinge. A pin hinge is a closed hinge construction, wherein at least two mutually engaging cylindrical bushings are coupled to a hinge pin. During the hinging no spaces are created or reduced, whereby the hinge cannot be blocked by dirt or fouling.

In another embodiment of the ball joint coupling according to the invention a first protrusion and a second protrusion are arranged at a mutual distance on each locking segment, wherein the first protrusion protrudes radially into the path of the axial displacement of the blocking ring and wherein the second protrusion protrudes at least in the second position of the locking segments radially into the path of the axial displacement of the blocking ring.

This first and second protrusion enable the locking segments to be pivoted between the first position and the second position by axial displacement of the blocking ring. The movement of all locking segments is thus coupled in a simple and robust manner. All locking segments will hereby be moved to the second position when the blocking ring is slid to the release position, and all locking segments will be moved to the first position when the blocking ring is slid to the blocking position.

In the blocking position the blocking ring preferably lies on the outer ends of the second protrusions. In the case of an axial force between the first coupling part and the second coupling part the locking means will hereby exert a radial force on the blocking ring, and the blocking ring will remain in the blocking position without additional measures.

In a further embodiment of the ball joint coupling according to the invention the first and second protrusions each comprise a sliding surface for contact with the blocking ring, wherein the normal of each sliding surface crosses the tangential pivot axis of the relevant locking segment.

Because the normal of each sliding surface crosses the tangential pivot axis, and so is neither parallel nor intersecting, a force exerted by the blocking ring on the sliding surfaces will result in a rotation of the relevant locking segment around the tangential pivot axis.

In yet another embodiment of the ball joint coupling according to the invention a number of actuators, such as a bellows, are arranged distributed over the periphery of the base part between the blocking ring and the base part for the purpose of axially displacing the blocking ring.

Spring means are further arranged between the blocking ring and the base part, which spring means urge the blocking ring to the blocking position.

The blocking ring can be slid from the one position to the other position in simple manner with the bellows by applying compressed air. By further arranging springs in the bellows which slide the blocking ring to the blocking position the springs urge the blocking ring to the blocking position when the bellows are not being powered. These springs are then also protected from the elements by the bellows.

Yet another embodiment of the ball joint coupling according to the invention comprises locking means for locking the blocking ring in the blocking position.

Despite the blocking ring enclosing the locking segments in the blocking position, whereby the first and second coupling part cannot be uncoupled and an uncoupling becomes possible only upon sliding of the blocking ring, it can be preferred to lock the blocking ring in the blocking position, so that undesired sliding of the blocking ring is prevented.

The locking means preferably comprise at least one locking hook arranged pivotally on the base part, which locking hook hooks behind the blocking ring in the blocking position.

The blocking ring can be held in the blocking position with the hook. The locking hook is optionally controllable by means of an actuator, such as a bellows, so that ending of the locking and uncoupling of the two coupling parts can be remotely controlled with a suitable compressed air control.

These and other features of the invention are further elucidated with reference to the accompanying drawings.
Figure 1 is a perspective view of an embodiment of a ball joint coupling according to the invention.
Figure 2A is a side view of the coupling according to figure 1 in coupled state.
Figure 2B is a cross-sectional view of the coupling according to figure 1 in coupled state.
Figure 3A is a side view of the coupling according to figure 1 in uncoupled state.
Figure 3B is a cross-sectional view of the coupling according to figure 1 in uncoupled state.

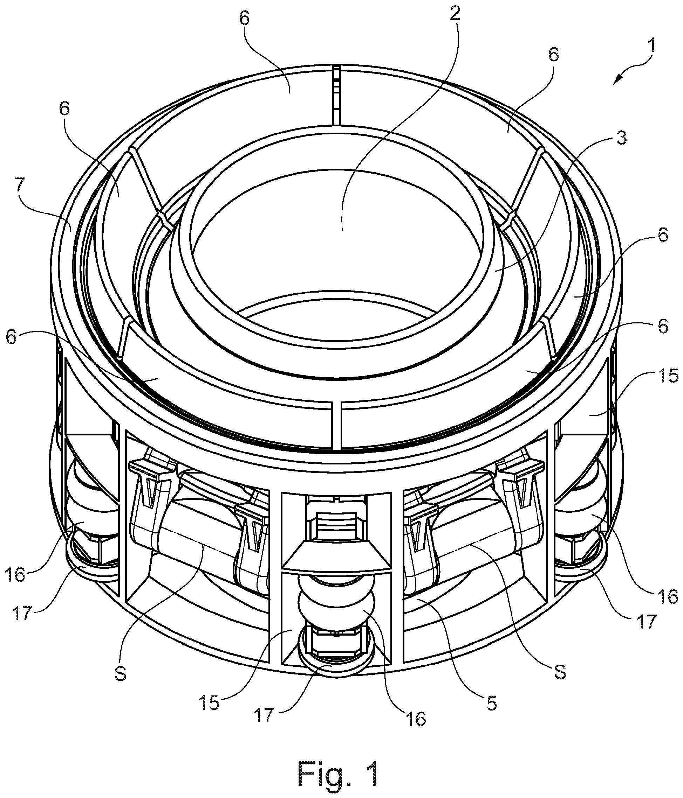

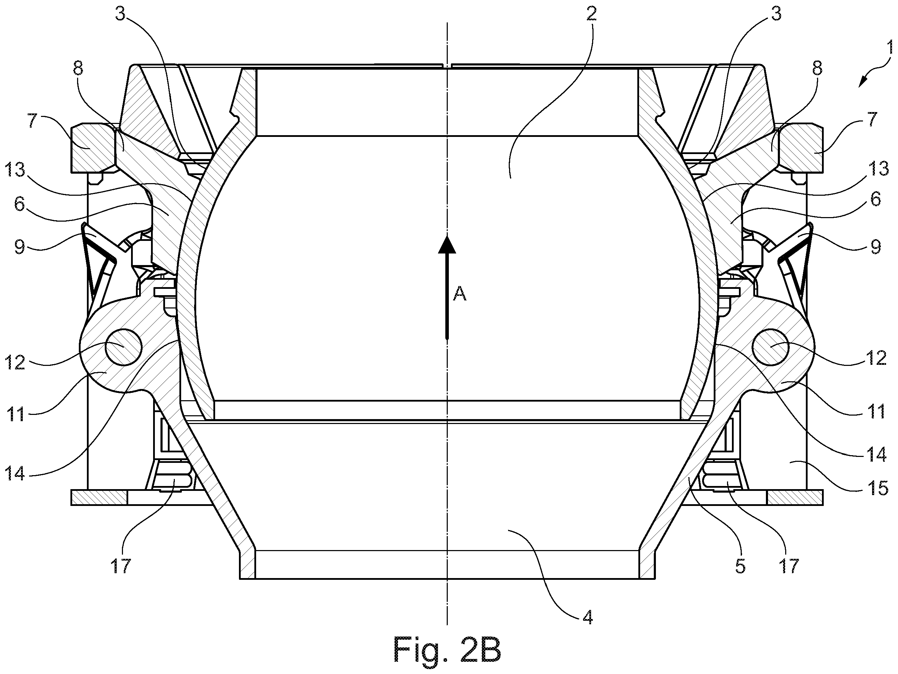

Figure 1 shows a ball joint coupling 1 with a first coupling part with a central passage 2 and a ball-shaped outer surface 3. Ball joint coupling 1 further has a second coupling part with a central passage 4 (see figure 2B) arranged in a base part 5 with locking segments 6 pivotally arranged thereon.

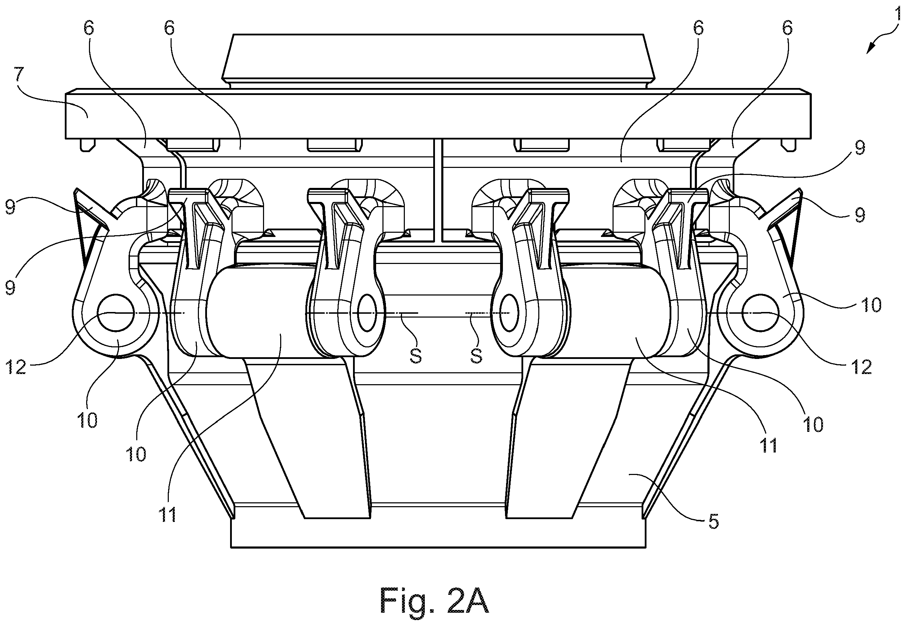

A blocking ring 7 which is slidable in axial direction A is arranged around locking segments 6. In the shown coupled state blocking ring 7 encloses the locking segments 6 in that blocking ring 7 lies against the top of the second protrusions 8 which are arranged on locking segments 6. Further also arranged on locking segments 6 are first protrusions 9 (see figure 2A).

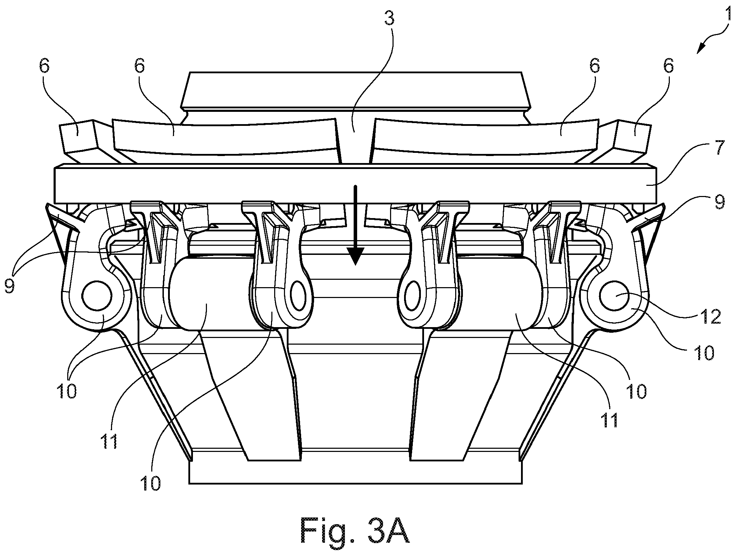

Figure 2A shows that each locking segment 6 is provided with two eyes 10 which, together with a bushing 11 arranged on base part 5 and a hinge pin 12, form a hinge with which each locking segment 6 is arranged on base part 5 of the second coupling part. For the sake of clarity of the figure the operating cage 15 and bellows 16, 17 have been omitted in figures 2A and 3A.

As is shown particularly clearly in figure 2B, hinge 10, 11, 12 is arranged on a first axial end of locking segment 6, while socket-shaped surface parts 13 are arranged adjacently of the second axial end of locking segment 6. The socket-shaped surface parts 13 form together with an inner edge 14 of base part 5 a socket-shaped inner surface which corresponds with the ball-shaped outer surface 3, so that a hinged coupling is obtained. The pivot axis S of each hinge runs here in tangential direction.

Figure 1 shows an operating cage 15 which is coupled to blocking ring 7 so that blocking ring 7 can be slid via bellows 16 and 17, which are arranged between this operating cage 15 and the base part 5, in axial direction A. Bellows 16, as well as the springs (not visible in the figures) provided in bellows 16, urge operating cage 15 and thereby blocking ring 7 to the shown blocking position. Bellows 17 power the operating cage to reach the release position. Provided in bellows 17 are stop blocks (not visible in the figures) so that the end stop for the release position is defined without over-compression of bellows 17.

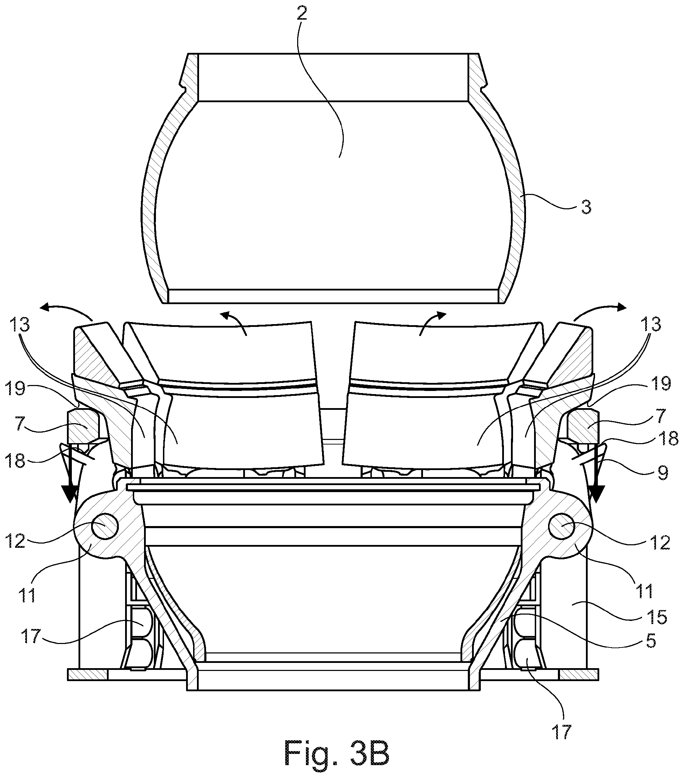

Figure 3A shows ball joint coupling 1 in the uncoupled position, wherein blocking ring 7 has been slid down by controlling of bellows 17, so that locking segments 6 can pivot from the first position to the second position in order to enable removal of the first coupling part 2, 3 (see figure 3B) .

It is further shown clearly in figure 3B that blocking ring 7 runs against sliding surface 18 of first protrusion 9 of a locking segment 6, whereby locking segment 6 automatically pivots radially outward. Second protrusion 8 also has a sliding surface 19, against which blocking ring 7 will press when locking ring 7 returns to the blocking position shown in figure 1, whereby locking segments 6 will pivot radially inward.

## Claims

1. Ball joint coupling (1) for pivotally coupling two pipe parts, which ball joint coupling (1) comprises:
- a first coupling part with a central passage (2) and an at least partially ball-shaped outer surface (3);
- a second coupling part with an axially extending, central passage (4) and an at least partially socket-shaped inner surface which corresponds with the at least partially ball-shaped outer surface (3) in order to form a ball joint;
wherein the second coupling part comprises a base part (5) arranged around the central passage, and locking segments (6) arranged around the central passage and pivotally on the base part (5), which locking segments (6) each have a socket-shaped surface part (13),
wherein the socket-shaped surface parts (13) form at least a part of the at least partially socket-shaped inner surface of the second coupling part,
wherein the locking segments (6) are each pivotable around a tangential pivot axis between a first position, wherein the socket-shaped surface parts (13) of the locking segments (6) lie against the ball-shaped outer surface (3) of the first coupling part, and a second position wherein the locking segments (6) release the first coupling part for uncoupling of the second coupling part; and
- a blocking ring (7) which extends around the second coupling part and is axially displaceable between a blocking position, in which the blocking ring (7) encloses the locking segments (6) in the first position and blocks the pivoting movement of the locking segments (6), and a release position for releasing the locking segments (6)
**characterized in that**
a hinge (10, 11, 12) is arranged between a first axial end of each locking segment (6) and the base part (5), wherein the tangential pivot axis is formed by the hinge (10, 11, 12).

2. Ball joint coupling (1) according to claim 1, wherein the socket-shaped surface part (13) of a locking segment (6) lies adjacently of a second axial end of the locking segment (6), which lies opposite the first axial end on which the hinge (10, 11, 12) is arranged.

3. Ball joint coupling (1) according to claim 1 or 2, wherein the hinge (10, 11, 12) of each locking segment (6) is arranged on the outer periphery of the base part (5).

4. Ball joint coupling (1) according to any one of the foregoing claims, wherein the hinge (10, 11, 12) of each locking segment (6) is a pin hinge.

5. Ball joint coupling (1) according to any one of the foregoing claims, wherein a first protrusion (9) and a second protrusion (8) are arranged at a mutual distance on each locking segment (6), wherein the first protrusion (9) protrudes radially into the path of the axial displacement of the blocking ring (7) and wherein the second protrusion (8) protrudes at least in the second position of the locking segments (6) radially into the path of the axial displacement of the blocking ring (7).

6. Ball joint coupling (1) according to claim 5, wherein in the blocking position the blocking ring (7) lies on the outer ends of the second protrusions (8).

7. Ball joint coupling (1) according to claim 5 or 6, wherein the first and second protrusions (8) each comprise a sliding surface (18, 19) for contact with the blocking ring (7), wherein the normal of each sliding surface (18, 19) crosses the tangential pivot axis of the relevant locking segment (6).

8. Ball joint coupling (1) according to any one of the foregoing claims, wherein a number of actuators, such as a bellows (16, 17), are arranged distributed over the periphery of the base part (5) between the blocking ring (7) and the base part (5) for the purpose of axially displacing the blocking ring (7).

9. Ball joint coupling (1) according to claim 8, wherein spring means are arranged between the blocking ring (7) and the base part (5), which spring means urge the blocking ring (7) to the blocking position.

10. Ball joint coupling (1) according to any one of the foregoing claims, further comprising locking means for locking the blocking ring (7) in the blocking position.

11. Ball joint coupling (1) according to claim 10, wherein the locking means comprise at least one locking hook arranged pivotally on the base part (5), which locking hook hooks behind the blocking ring (7) in the blocking position.

## Patentansprüche

1. Kugelgelenkkupplung (1) zum schwenkbaren Kuppeln zweier Rohrteile, wobei die Kugelgelenkkupplung (1) Folgendes umfasst:
- einen ersten Kupplungsteil mit einem mittigen Durchgang (2) und einer zumindest teilweise kugelförmigen Außenfläche (3);
- einen zweiten Kupplungsteil mit einem sich axial erstreckenden, mittigen Durchgang (4) und einer zumindest teilweise hülsenförmigen Innenfläche, die der zumindest teilweise kugelförmigen Außenfläche (3) entspricht, um ein Kugelgelenk zu bilden;
wobei der zweite Kupplungsteil einen um den mittigen Durchgang angeordneten Basisteil (5) und um den mittigen Durchgang und schwenkbar an dem Basisteil (5) angeordnete Arretierungssegmente (6) umfasst, wobei die Arretierungssegmente (6) jeweils einen hülsenförmigen Flächenteil (13) aufweisen,
wobei die hülsenförmigen Flächenteile (13) zumindest einen Teil der zumindest teilweise hülsenförmigen Innenfläche des zweiten Kupplungsteils bilden,
wobei die Arretierungssegmente (6) jeweils um eine tangentiale Schwenkachse zwischen einer ersten Position, in der die hülsenförmigen Flächenteile (13) der Arretierungssegmente (6) an der kugelförmigen Außenfläche (3) des ersten Kupplungsteils anliegen, und einer zweiten Position, in der die Arretierungssegmente (6) den ersten Kupplungsteil zum Entkuppeln des zweiten Kupplungsteils freigeben, schwenkbar sind; und
- einen Blockierring (7), der sich um den zweiten Kupplungsteil erstreckt und axial zwischen einer Blockierposition, in der der Blockierring (7) die Arretierungssegmente (6) in der ersten Position umschließt und die Schwenkbewegung der Arretierungssegmente (6) blockiert, und einer Freigabeposition zum Freigeben der Arretierungssegmente (6) verschiebbar ist,
**dadurch gekennzeichnet, dass**
ein Scharnier (10, 11, 12) zwischen einem ersten axialen Ende jedes Arretierungssegments (6) und dem Basisteil (5) angeordnet ist, wobei die tangentiale Schwenkachse durch das Scharnier (10, 11, 12) gebildet ist.

2. Kugelgelenkkupplung (1) nach Anspruch 1, wobei der hülsenförmige Flächenteil (13) eines Arretierungssegments (6) an ein zweites axiales Ende des Arretierungssegments (6) angrenzt, das dem ersten axialen Ende, an dem das Scharnier (10, 11, 12) angeordnet ist, gegenüberliegt.

3. Kugelgelenkkupplung (1) nach Anspruch 1 oder 2, wobei das Scharnier (10, 11, 12) jedes Arretierungssegments (6) am Außenumfang des Basisteils (5) angeordnet ist.

4. Kugelgelenkkupplung (1) nach einem der vorhergehenden Ansprüche, wobei das Scharnier (10, 11, 12) jedes Arretierungssegments (6) ein Bolzenscharnier ist.

5. Kugelgelenkkupplung (1) nach einem der vorhergehenden Ansprüche, wobei ein erster Vorsprung (9) und ein zweiter Vorsprung (8) in einem gegenseitigen Abstand an jedem Arretierungssegment (6) angeordnet sind, wobei der erste Vorsprung (9) radial in den Pfad der axialen Verschiebung des Blockierrings (7) ragt und wobei der zweite Vorsprung (8) zumindest in der zweiten Position der Arretierungssegmente (6) radial in den Pfad der axialen Verschiebung des Blockierrings (7) ragt.

6. Kugelgelenkkupplung (1) nach Anspruch 5, wobei in der Blockierposition der Blockierring (7) an den äußeren Enden der zweiten Vorsprünge (8) anliegt.

7. Kugelgelenkkupplung (1) nach Anspruch 5 oder 6, wobei die ersten und zweiten Vorsprünge (8) jeweils eine Gleitfläche (18, 19) für einen Kontakt mit dem Blockierring (7) umfassen, wobei die Normale jeder Gleitfläche (18, 19) die tangentiale Schwenkachse des betreffenden Arretierungssegments (6) kreuzt.

8. Kugelgelenkkupplung (1) nach einem der vorhergehenden Ansprüche, wobei eine Anzahl von Aktuatoren, wie etwa Bälge (16, 17), verteilt über den Umfang des Basisteils (5) zwischen dem Blockierring (7) und dem Basisteil (5) zum Zweck einer axialen Verschiebung des Blockierrings (7) angeordnet sind.

9. Kugelgelenkkupplung (1) nach Anspruch 8, wobei Federmittel zwischen dem Blockierring (7) und dem Basisteil (5) angeordnet sind, wobei die Federmittel den Blockierring (7) in die Blockierposition drücken.

10. Kugelgelenkkupplung (1) nach einem der vorhergehenden Ansprüche, ferner umfassend Arretierungsmittel zum Arretieren des Blockierrings (7) in der Blockierposition.

11. Kugelgelenkkupplung (1) nach Anspruch 10, wobei die Arretierungsmittel mindestens einen Arretierungshaken umfassen, der schwenkbar an dem Basisteil (5) angeordnet ist, wobei der Arretierungshaken hinter dem Blockierring (7) in der Blockierposition einhakt.

## Revendications

1. Dispositif d'accouplement à joint à rotule (1) destiné à accoupler de façon pivotante deux parties de tuyau, lequel dispositif d'accouplement à joint à rotule (1) comprend :
- une première partie d'accouplement avec un passage central (2) et une surface extérieure au moins partiellement en forme de rotule (3) ;
- une seconde partie d'accouplement avec un passage central s'étendant axialement (4) et une surface intérieure au moins partiellement en forme de logement de rotule qui correspond à la surface extérieure au moins partiellement en forme de rotule (3) afin de former un joint à rotule ;
dans lequel la seconde partie d'accouplement comprend une partie de base (5) agencée autour du passage central, et des segments de verrouillage (6) agencés autour du passage central et de façon pivotante sur la partie de base (5), lesquels segments de verrouillage (6) ont chacun une partie de surface en forme de logement de rotule (13),
dans lequel les parties de surface en forme de logement de rotule (13) forment au moins une partie de la surface intérieure au moins partiellement en forme de logement de rotule de la seconde partie d'accouplement,
dans lequel les segments de verrouillage (6) sont chacun pivotants autour d'un axe de pivotement tangentiel entre une première position, dans laquelle les parties de surface en forme de logement de rotule (13) des segments de verrouillage (6) se trouvent contre la surface extérieure en forme de rotule (3) de la première partie d'accouplement, et une seconde position, dans laquelle les segments de verrouillage (6) libèrent la première partie d'accouplement pour le désaccouplement de la seconde partie d'accouplement ; et
- une bague de blocage (7) qui s'étend autour de la seconde partie d'accouplement et est axialement déplaçable entre une position de blocage, dans laquelle la bague de blocage (7) entoure les segments de verrouillage (6) dans la première position et bloque le mouvement de pivotement des segments de verrouillage (6), et une position de libération pour libérer les segments de verrouillage (6)
**caractérisé en ce que**
une articulation (10, 11, 12) est agencée entre une première extrémité axiale de chaque segment de verrouillage (6) et la partie de base (5), dans lequel l'axe de pivotement tangentiel est formé par l'articulation (10, 11, 12).

2. Dispositif d'accouplement à joint à rotule (1) selon la revendication 1, dans lequel la partie de surface en forme de logement de rotule (13) d'un segment de verrouillage (6) se trouve de façon adjacente à une seconde extrémité axiale du segment de verrouillage (6), qui se trouve de façon opposée à la première extrémité axiale sur laquelle l'articulation (10, 11, 12) est agencé.

3. Dispositif d'accouplement à joint à rotule (1) selon la revendication 1 ou 2, dans lequel l'articulation (10, 11, 12) de chaque segment de verrouillage (6) est agencée sur la périphérie extérieure de la partie de base (5).

4. Dispositif d'accouplement à joint à rotule (1) selon l'une quelconque des revendications précédentes, dans lequel l'articulation (10, 11, 12) de chaque segment de verrouillage (6) est une articulation à goupille.

5. Dispositif d'accouplement à joint à rotule (1) selon l'une quelconque des revendications précédentes, dans lequel une première saillie (9) et une seconde saillie (8) sont agencées à une distance mutuelle sur chaque segment de verrouillage (6), dans lequel la première saillie (9) fait saillie radialement dans le trajet du déplacement axial de la bague de blocage (7) et dans lequel la seconde saillie (8) fait saillie au moins dans la seconde position des segments de verrouillage (6) radialement dans le trajet du déplacement axial de la bague de blocage (7).

6. Dispositif d'accouplement à joint à rotule (1) selon la revendication 5, dans lequel, dans la position de blocage, la bague de blocage (7) se trouve sur les extrémités extérieures des secondes saillies (8).

7. Dispositif d'accouplement à joint à rotule (1) selon la revendication 5 ou 6, dans lequel les première et seconde saillies (8) comprennent chacune une surface de coulissement (18, 19) pour contact avec la bague de blocage (7), dans lequel la normale de chaque surface de coulissement (18, 19) croise l'axe de pivotement tangentiel du segment de verrouillage pertinent (6).

8. Dispositif d'accouplement à joint à rotule (1) selon l'une quelconque des revendications précédentes, dans lequel un nombre d'actionneurs, tels que des soufflets (16, 17), sont agencés de façon distribuée sur la périphérie de la partie de base (5) entre la bague de blocage (7) et la partie de base (5) dans le but du déplacement axial de la bague de blocage (7).

9. Dispositif d'accouplement à joint à rotule (1) selon la revendication 8, dans lequel des moyens à ressort sont agencés entre la bague de blocage (7) et la partie de base (5), lesquels moyens à ressort poussent la bague de blocage (7) jusqu'à la position de blocage.

10. Dispositif d'accouplement à joint à rotule (1) selon l'une quelconque des revendications précédentes, comprenant en outre des moyens de verrouillage pour verrouiller la bague de blocage (7) dans la position de blocage.

11. Dispositif d'accouplement à joint à rotule (1) selon la revendication 10, dans lequel les moyens de verrouillage comprennent au moins un crochet de verrouillage agencé de façon pivotante sur la partie de base (5), lequel crochet de verrouillage s'accroche derrière la bague de blocage (7) dans la position de blocage.
